(19) Europäisches Patentamt
European Patent Office
Office européen des brevets

(11) Publication number: **0 201 194 B1**

(12) **EUROPEAN PATENT SPECIFICATION**

(45) Date of publication of the patent specification: 31.10.90

(51) Int. Cl.[5]: **A01N 37/22**, A01N 37/46

(21) Application number: 86302436.0

(22) Date of filing: 02.04.86

(54) **Diabrotica larvicidal agents.**

(30) Priority: 05.04.85 US 720232

(43) Date of publication of application: 17.12.86 Bulletin 86/46

(45) Publication of the grant of the patent: 31.10.90 Bulletin 90/44

(84) Designated Contracting States: AT BE CH DE FR GB IT LI LU NL SE

(56) References cited:
DE-A- 3 211 987

CHEMICAL ABSTRACTS, vol. 91, no. 5, 30th July 1979, page 588, abstract no. 38968p, Columbus, Ohio, US; M. MURZA et al.: "Synthesis and properties of anilides of perfluorocarboxylic acids", & IZV. VYSSH. UCHEBN. ZAVED., KHIM. KHIM. TEKHNOL. 1979, 22(3), 267-70 000

(73) Proprietor: ELI LILLY AND COMPANY, Lilly Corporate Center, Indianapolis Indiana 46285(US)

(72) Inventor: Chio, Hang, 128 Lakeview Court South, Greenfield Indiana 46149(US)

(74) Representative: Tapping, Kenneth George et al, Erl Wood Manor, Windlesham Surrey, GU20 6PH(GB)

EP 0 201 194 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The genus Diabrotica, Order Coleoptera, Family Chrysomelidae, includes numerous insect species which are highly destructive to crops. The adults of Diabrotica spp. feed on plant foliage and pollen, such as the foliage and pollen of cucumbers and other cucurbits; because of this, a few of the Diabrotica spp. are commonly referred to as cucumber beetles. On the other hand, the larvae of Diabrotica spp. live in soil and feed on the roots of plants, notably corn but to some extent other crops as well. Many of the Diabrotica spp. are therefore commonly referred to as "corn rootworm".

There are numerous Diabrotica spp., including the following:

Diabroticavirgiferavirgifera Leconte, western corn rootworm
Diabroticalongicornisbarberi Smith & Lawrence, northern corn rootworm
Diabroticaundecimpunctatahowardi Barber, southern corn rootworm
Diabroticabalteata Leconte, banded cucumber beetle
Diabroticaundecimpunctataundecimpunctata Mannerheim, western spotted cucumber beetle
Diabroticavirgiferazeae Krysan & Smith, Mexican corn rootworm

All share a common life history in that their larvae live in the soil and feed on the roots of corn, and, occasionally, the roots of cucurbits, peanuts, and other crops.

Some Diabrotica larvae constitute a severe soil pest where corn is grown year after year. The Diabrotica larvae feed on corn roots, and yields of infested fields are much reduced, principally due to lodging but also because the plants are deprived of nourishment.

It is recognized that the control of Diabrotica larvae presents a unique pest control problem, and that the majority of ordinary insecticidally-active compounds are inadequate. See U.S. 4,065,558, 4,439,430, and 4,481,216. Because of the severity of the problem, a number of products have been developed specifically to control Diabrotica larvae. However, all compounds currently registered for the control of Diabrotica larvae are phosphates or carbamates which have similar modes of activity. Nonperformance of these compounds is frequently reported; microbial breakdown, lack of sufficient residual activity when crops are planted early, and insecticidal resistance are implicated in the non-performance reports.

The compounds to be employed in the present Diabrotica larvicidal methods are part of a larger series of compounds exhibiting general insecticidal activity. The present invention resides in the discovery that particular members of this series exhibit outstanding activity for the control of larvae of Diabrotica spp. These compounds additionally provide good residual activity; being non-carbamates and non-phosphates, they provide a novel class of chemicals when microbial degradation and resistance difficulties are problems of conventional insecticides. The present invention therefore provides a significant new tool in the control of Diabrotica larvae.

The present invention provides a method for inhibiting larvae of Diabrotica which comprises applying to the locus of the larvae an effective amount of a fluorinated cycloalkanecarboxanilide of the following formula (I)

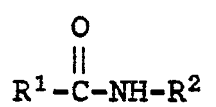

(I)

wherein $R^1$ represents
(1) fluorocyclopentyl of the formula

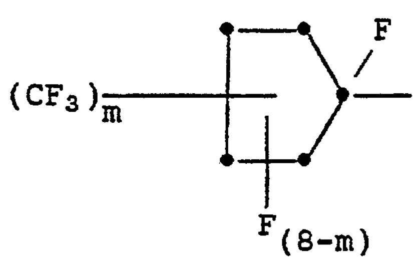

or

or
(2) fluorocyclohexyl of the formula

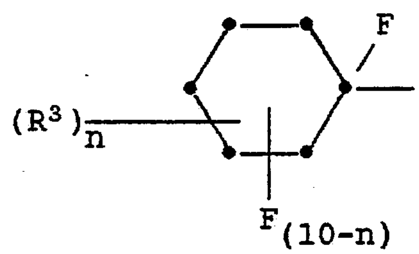

wherein m represents 0, 1, or 2; n represents 0 or 1; $R^3$ represents trifluoromethyl or trifluoromethoxy; and $R^2$ represents

(1) 2-bromo-4-nitrophenyl,
(2) 2-chloro-4-nitrophenyl,
(3) 2-iodo-4-nitrophenyl,
(4) 2-cyano-4-chlorophenyl,
(5) 2,5-dichloro-4-nitrophenyl,
(6) 2-methyl-4-nitro-5-chlorophenyl,
(7) 2,3,4,5-tetrachlorophenyl, or
(8) pentafluorophenyl;

or a sodium, potassium, or ammonium salt of one of the foregoing compounds, where ammonium refers to the formula

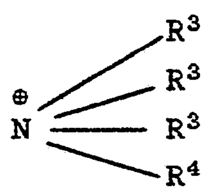

wherein each $R^3$ independently represents alkyl of $C_1$-$C_{20}$, benzyl, 2-hyroxyethyl, 2-hydroxypropyl, or 3-hydroxypropyl, and $R^4$ represents hydrogen or $R^3$, the total number of carbon atoms in all $R^3$ and $R^4$ groups being from 12 to 60, except that when one or more $R^3$ or $R^4$ groups represents 2-hydroxyethyl, 2-hydroxypropyl, or 3-hydroxypropyl, the total number of carbon atoms in all $R^3$ and $R^4$ groups is from 6 to 60.

The invention also provides insecticidal formulations for inhibiting Diabrotica larvae comprising as active ingredient, from 0.05 to 95.0 percent by weight of a fluorinated cycloalkane carboxanilide of formula (I) in combination with at least one agriculturally acceptable carrier or diluent.

The compounds to be employed in the present methods are prepared in conventional methods, by reacting a cycloalkanecarbonyl halide with a suitable aniline:

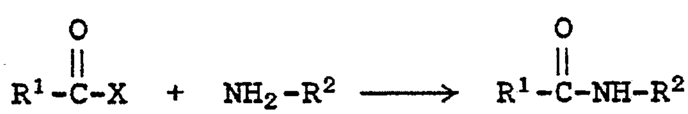

The reaction is carried out in a solvent such as diethyl ether, tetrahydrofuran, or a halogenated hydrocarbon, at temperatures of from 10-110°C, preferably 20-70°C., using equimolar amounts of the reactants and of a hydrohalide acceptor.

Salts are similarly prepared in conventional procedures. The sodium and potassium salts are prepared by reacting the parent compound with sodium or potassium hydroxide. These salts can be converted to the ammonium salts by reaction with a suitable ammonium halide of the formula

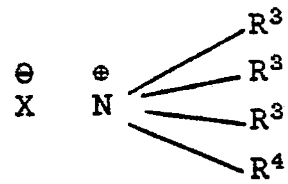

Alternatively, the parent compounds can be reacted with a suitable ammonium hydroxide of the formula

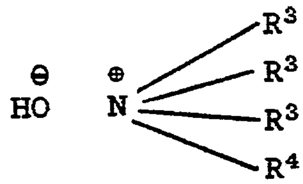

The synthesis of the carboxanilides to be employed in the methods of the present invention is illustrated by the following examples.

EXAMPLE 1

2'-Bromo-4'-nitro-1,2,2,3,3,4,4,5,5,6,6-undecafluorocyclohexanecar oxanilide

1,2,2,3,3,4,4,5,5,6,6-Undecafluorocyclohexanecarbonyl fluoride estimated to be of 60% purity (10.9 grams; 0.02 mole) and triethylamine (2 grams; 0.02 mole) were placed in 25 ml of diethyl ether. 2-Bromo-4-nitroaniline (11.35 grams; 0.02 mole) in 75 ml of diethyl ether was added dropwise at ambient temperature of about 25°C. The reaction mixture was then stirred for 1¼ hours. TLC showed no remaining aniline starting material. The reaction mixture was washed with water three times and with dilute sodium bicarbonate solution once, and thereafter dried. The solvent was then removed by evaporation. The product residue was chromatographed on silica gel HPLC with ethyl acetate: hexane 1:5, which yielded 14.5 grams of product contained occluded solvent. It was recrystallized from hexane and air dried, yielding 5.0 grams (48%) of purified product melting at 98-101°C. An additional 1 gram was obtained from the mother liquor for a total yield of 57%.

Analysis calculated for $C_{13}H_4BrF_{11}N_2O_3$
Theory: C, 29.74; H, 0.77; N, 5.34;
Found: C, 30.14; H, 0.91; N, 5.81.

Example 2 = 2'-chloro-4'-nitro-1,2,2,3,3,4,4,5,5,6,6-undecafluorocyclohexanecarboxanilide, m.p., 90-93°C.

Example 3 = 2'-iodo-4'-nitro-1,2,2,3,3,4,4,5,5,6,6-undecafluorocyclohexanecarboxanilide, m.p., 125-127°C.

Example 4 = 2'-cyano-4'-chloro-1,2,2,3,3,4,4,5,5,6,6-undecafluorocyclohexanecarboxanilide, m.p., 122-124°C.

Example 5 = 2',5'-dichloro-4'-nitro-1,2,2,3,3,4,4,5,5,6,6-undecafluorocyclohexanecarb xanilide, m.p., 99-100°C.

Example 6 = 2',3',4',5'-tetrachloro-1,2,2,3,3,4,4,5,5,6,6-undecafluorocyclohexanecarboxanilide, m.p., 130°C.

Example 7 = 2',3',4',5',6',1,2,2,3,3,4,4,5,5,6,6-hexadecafluorocyclohexanecarboxanilide, m.p., 135°C.

Example 8 = 2'-bromo-4'-nitro-4-(trifluoromethyl)-1,2,2,3,3,4,5,5,6,6-decafluorocyclohexanecarboxanilide, m.p., 102-104°C.

Example 9 = 50:50 Mixture of 2'-bromo-4'-nitro-2-(trifluoromethyl)-1,2,3,3,4,4,5,5,6,6-decafluorocyclohexanecarboxanilide and 2'-bromo-4'-nitro-x,x-bis(trifluoromethyl)-x,x,x,x,x,x,x-heptafluorocyclopentanecarboxanilide, m.p., 66-80°C.

EXAMPLE 10

2'-Bromo-4'-nitro-3-(trifluoromethyl)-1,2,2,3,4,4,5,5,6,6-decafluo ocyclohexanecarboxanilide.

In a Teflon jar equipped with a stainless steel condensor maintained at from -40 to -50°C., approximately 130 cc of commercial anhydrous HF underwent a pre-electrolysis to remove the last traces of water. An electrode pack of about 2 $in^3$ in size consisting of alternating nickel and carbon steel plates was used under a nitrogen atmosphere at a maximum current density of about 20 $ma/cm^2$ and at or below a cell voltage of 5.2 volts relative to a copper reference electrode. 4.2 g (0.02 moles) of distilled m-(trifluoromethyl)benzoyl chloride was added, and 5.6 amp hrs was passed (75% of theoretical). The reaction mixture was extracted with three 20 cc portions of $CFCl_3$, and the extracts were added to 3.2 g of 2-bromo-4-nitroaniline (0.015 moles) and 2.5 g (0.025 moles) of triethylamine in 25 cc methylene chloride. The organic layer was washed with dilute HCl, dried over sodium sulfate, and chromatographed on silica gel with toluene to give 2'-bromo-4'-nitro-3-(trifluoromethyl)-1,2,2,3,4,4,5,5,6,6-decafluorocyc ohexanecarboxanilide, m.p., 55-60°C., yield 35% from acid chloride, (after recrystallization from toluene, m.p., 79-82°C.). $F^{19}$ NMR was consistent with a mixture of cis/trans isomers.

Analysis calculated for $C_{14}H_4BrF_{13}N_2O_3$
Theory: C, 29.24; H, 0.70; N, 4,87;
Found: C, 29.20; H, 0.83; N, 5.16;
Found after recrystalization:
C, 29.14; H, 0.66; N, 4.77.

A 4% yield of the same product, likewise a mixture of cis/trans isomers, was obtained using m-toluoyl chloride in the above reaction, by separating the product acid fluoride from HF without the benefit of extraction.

Found: C, 29.36; H, 0.80; N, 4.79.

EXAMPLE 11

2'-Bromo-4'-nitro-4-(trifluoromethoxy)-1,2,2,3,3,4,5,5,6,6-decafluorocyclohexanecarboxanilide, m.p., 90-92°C., was prepared in the same procedure as described in the preceding example. The yield was 20% (from p-(trifluoromethoxy)benzoyl chloride). After recrystallization from toluene, the produce melted at 101=104°C.

Analysis calculated for $C_{14}H_4BrF_{13}N_2O_3$
Theory: C, 28.45; H, 0.68; N, 4.74;
Found: C, 28.64; H, 0.69; N, 4.47;
Found after recrystallization:
C, 28.42; H, 0.73; N, 4.64.

EXAMPLE 12

Example 12 = 2'-methyl-4'-nitro-5'-chloro-1,2,2,3,3,4,4,5,5,6,6-undecafluorocyclohexanecarboxanilide, m.p., 154-156°C.

EXAMPLE 13

Mixture of 2'-bromo-4'-nitro-1,2,2,3,3,4,4,5,5,6,6-undecafluorocyclohexanecarboxanilide and 2'-bromo-4'-nitro-x-(trifluoromethyl)-x,x,x,x,x,x,x,x-octafluorocyclope tanecarboxanilide

2'-Bromo-4'-nitro-1,2,2,3,3,4,4,5,5,6,6-undecafluorocyclohexanecar oxanilide was prepared from 1,2,2,3,3,4,4,5,5,6,6-undecafluorocyclohexanecarbonyl fluoride and 2-bromo-4-nitroaniline and recrystallized from toluene. The toluene mother liquor was evaporated to half the original volume. Product crystallized and was separated. The toluene mother liquor was chromatographed on silica gel with toluene, then recrystallized from toluene, m.p., 85-92°C., yield 19%.

Calculated for $C_{13}H_4BrF_{11}N_2O_3$
Theory: C, 29.74; H, 0.77; N, 5.34;
Found: C, 29.67; H, 0.60; N, 5.48.
$F^{19}$-NMR indicated that the product consisted of approximately 66% 2'-bromo-4'-nitro-1,2,2,3,3,4,4,5,5,6,6-undecafluorocyclohexanecarboxanilide and approximately 33% 2'-bromo-4'-nitro-x-(trifluoromethyl-x,x,x,x,x,x,x,x-octafluorocyclopen anecarboxanilide.

The synthesis of salts of the present carboxanilides is illustrated by the following two examples.

EXAMPLE 14

2'-Bromo-4'-nitro-1,2,2,3,3,4,4,5,5,6,6-undecafluorocyclohexanecar oxanilide, sodium salt

2'-Bromo-4'-nitro-1,2,2,3,3,4,4,5,5,6,6-undecafluorocyclohexanecar oxanilide (2.6 grams; 0.005 mole) and sodium hydroxide (0.2 gram; 0.005 mole) were combined in 50 ml of acetone at room temperature of about 25°C. All volatiles and water were removed by evaporation. The solid residue was dissolved in hot toluene/ethyl acetate; the product did not crystallize but formed lumps. These were separated and vacuum dried. The yield was 2.1 gram (77%), m.p., 200°C. with decomposition.

Analysis calculated for $C_{13}H_3BrF_{11}N_2O_3Na$
Theory: C, 28.54; H, 0.55; N, 5.12;
Found: C, 28.84; H, 1.10; N, 4.90.

EXAMPLE 15

2'-Bromo-4'-nitro-1,2,2,3,3,4,4,5,5,6,6-undecafluorocyclohexanecar oxanilide, tetraethylammonium salt

2'-Bromo-4'-nitro-1,2,2,3,3,4,4,5,5,6,6,-undecafluorocyclohexaneca boxanilide (2.6 grams; 0.005 mole) was dissolved in 25 ml. of acetone and 2N sodium hydroxide (0.2 gram; 0.005 mole) was added all at once. Tetraethylammonium bromide (1.1 gram; 0.005 mole) was then added and the reaction mixture was stirred until it became a single phase. The reaction mixture was poured into ice/water, extracted with methylene chloride/brine, dried over magnesium sulfate, and evaporated. H-NMR showed a mixture of the intended salt and the parent compound. The residue was therefore dissolved in acetone, retreated with sodium hydroxide and tetraethylammonium bromide, and worked up as before, yielding 1.5 grams (46% yield) of the 2'-bromo-4'-nitro-1,2,2,3,3,4,4,5,5,6,6-undecafluorocyclohexanecarboxanilide, tetraethylammonium salt as an oil.

Other representative salts to be employed in the present invention, prepared in analogous manner, include the following.

Example 16 = 2'-bromo-4'-nitro-1,2,2,3,3,4,4,5,5,6,6,-undecafluorocyclohexanecarboxanilide, tetra-n-propylammonium salt, m.p., 86-87°C

Example 17 = 2'-bromo-4'-nitro-1,2,2,3,3,4,4,5,5,6,6-undecafluorocyclohexanecarboxanilide, tetra-n-butylammonium salt, m.p., 94-97°C

Example 18 = 2'-bromo-4'-nitro-1,2,2,3,3,4,4,5,5,6,6,-undecafluorocyclohexanecarboxanilide, tetra-n-pentylammonium salt, m.p., 80-81°C

Example 19 = 2'-bromo-4'-nitro-1,2,2,3,3,4,4,5,5,6,6-undecafluorocyclohexanecarboxanilide, tetra-n-hexylammonium salt, an oil

Example 20 = 2'-bromo-4'-nitro-1,2,2,3,3,4,4,5,5,6,6-undecafluorocyclohexanecarboxanilide, tetra-n-heptylammonium salt, an oil

Example 21 = 2'-bromo-4'-nitro-1,2,2,3,3,4,4,5,5,6,6-undecafluorocyclohexanecarboxanilide, methyl-tri-n-butylammonium salt, m.p., 129-130°C

Example 22 = 2'-bromo-4'-nitro-1,2,2,3,3,4,4,5,5,6,6-undecafluorocyclohexanecarboxanilide, benzyltriethylammonium salt, m.p., 77-82°C

Example 23 = 2'-bromo-4'-nitro-1,2,2,3,3,4,4,5,5,6,6-undecafluorocyclohexanecarboxanilide, benzyl-tri-n-butylammonium salt, an oil

Example 24 = 2'-bromo-4'-nitro-1,2,2,3,3,4,4,5,5,6,6-undecafluorocyclohexanecarboxanilide, methyl-tri-n-octylammonium salt, an oil

Example 25 = 2'-bromo-4'-nitro-1,2,2,3,3,4,4,5,5,6,6-undecafluorocyclohexanecarboxanilide, methyl-tris($C_8$-$C_{10}$)ammonium salt, an oil

Example 26 = 2'-bromo-4'-nitro-1,2,2,3,3,4,4,5,5,6,6-undecafluorocyclohexanecarboxanilide, hexadecyltrimethylammonium salt, m.p., 53-55°C.

Example 27 = 2'-bromo-4'-nitro-1,2,2,3,3,4,4,5,5,6,6-undecafluorocyclohexanecarboxan lide, octadecyltrimethylammonium salt, m.p., 48-53°C

Example 28 = 2'-bromo-4'-nitro-1,2,2,3,3,4,4,5,5,6,6-undecafluorocyclohexanecarboxanilide, dimethylbis($C_{10}$-$C_{18}$)ammonium salt, an oil

Example 29 = 2'-bromo-4'-nitro-1,2,2,3,3,4,4,5,5,6,6-undecafluorocyclohexanecarboxanilide, dimethylbis($C_{14}$-$C_{18}$)ammonium salt, an oil

Example 30 = 2'-bromo-4'-nitro-1,2,2,3,3,4,4,5,5,6,6-undecafluorocyclohexanecarboxanilide, tri-n-butylammonium salt, m.p., 74-77°C

Example 31 = 2'-chloro-4'-nitro-1,2,2,3,3,4,4,5,5,6,6-undecafluorocyclohexanecarboxanilide, tetra-n-propylammonium salt, m.p., 65-69°C

Example 32 = 2'-chloro-4'-nitro-1,2,2,3,3,4,4,5,5,6,6-undecafluorocyclohexanecarboxanilide, tetra-n-butylammonium salt, m.p., 107-109°C

Example 33 = 2'-chloro-4'-nitro-1,2,2,3,3,4,4,5,5,6,6-undecafluorocyclohexanecarboxanilide, tetra-n-pentylammonium salt, m.p., 68-70°C

Example 34 = 2'-chloro-4'-nitro-1,2,2,3,3,4,4,5,5,6,6-undecafluorocyclohexanecarboxanilide, tetra-n-hexylammonium salt, an oil

Example 35 = 2'-chloro-4'-nitro-1,2,2,3,3,4,4,5,5,6,6-undecafluorocyclohexanecarboxanilide, tetra-n-heptylammonium salt, an oil

Example 36 = 2'-chloro-4'-nitro-1,2,2,3,3,4,4,5,5,6,6-undecafluorocyclohexanecarboxanilide, hexadecyltrimethylammonium salt, m.p., 58-60°C

Example 37 = 2'-chloro-4'-nitro-1,2,2,3,3,4,4,5,5,6,6-undecafluorocyclohexanecarboxanilide, octadecyltrimethylammonium salt, m.p., 57-59°C

Example 38 = 2'-chloro-4'-nitro-1,2,2,3,3,4,4,5,5,6,6-undecafluorocyclohexanecarboxanilide, methyltris($C_8$-$C_{10}$)ammonium salt, an oil

Example 39 = 2'-chloro-4'-nitro-1,2,2,3,3,4,4,5,5,6,6-undecafluorocyclohexanecarboxanilide, methyltri-n-octylammonium salt, an oil

Example 40 = 2'-cyano-4'-chloro-1,2,2,3,3,4,4,5,5,6,6-undecafluorocyclohexanecarboxanilide, hexadecyltrimethylammonium salt, m.p., 100-102°C

Example 41 = 2',5'-dichloro-4'-nitro-1,2,2,3,3,4,4,5,5,6,6-undecafluorocyclohexanecarboxanilide, tetra-n-propylammonium salt, m.p., 124-125°C.

Example 42 = 2'-methyl-4'-nitro-5'-chloro-1,2,2,3,3,4,4,5,5,6,6-undecafluorocyclohexanecarboxanilide, tetra-n-propylammonium salt, an oil.

Example 43 = 2'-methyl-4'-nitro-5'-chloro-1,2,2,3,3,4,4,5,5,6,6-undecafluorocyclohexanecarboxanilide, hexadecyltrimethylammonium salt, m.p., 75-77°C.
Example 44 = 2',3',4',5'-tetrachloro-1,2,23,3,4,4,5,5,6,6-undecafluorocyclohexanecarboxanilide, octadecyltrimethylammonium salt, m.p., 65-68°C.

EXAMPLE 45

2'-Bromo-4'-nitro-1,2,2,3,3,4,4,5,5,6,6-undecafluorocyclohexanecar oxanilide.

This compound, which is also the subject of Example 1, was prepared in an alternate procedure employing p-nitroaniline as starting material. To a 100 ml round bottom flask equipped with a reflux condenser, stirrer, thermometer, and addition funnel were added 37 ml of methylene chloride and 11.86 g of pyridine. Keeping the reactor contents under 40°C with a water bath, 25.17 g of bromine were added over 3 to 5 minutes and the solution was stirred 30 minutes at 20-25°C.

50 ml of methylene chloride and 20.72 g of p-nitroaniline were placed in a separate 250 ml flask equipped with an addition funnel, condenser, thermometer, and mechanical stirrer. Keeping the temperature below 30°C with a water bath, the methylene chloride solution of pyridine/bromine prepared above was added dropwise to the slurry of p-nitroaniline in methylene chloride over 10 minutes. 20 ml of additional methylene chloride was used to transfer the pyridine/bromine solution. The reaction mixture was stirred for 30 minutes at 25°C.

The reaction mixture was then cooled in an ice bath to 0-5°C and 15.18 g of triethylamine were added all at once. Next, 82.03 g of perfluorocyclohexanecarbonyl fluoride were added dropwise over 15 minutes, maintaining the temperature below 20°C., and the reaction mixture was stirred for 30 minutes at 5-10°C.

The reaction mixture was then worked up. First 100 ml of aqueous acetic acid solution (100 ml of water and 10 ml of acetic acid) were added and the reaction mixture was agitated for 10 minutes (pH 4.3). The layers were then separated. The aqueous layer was extracted with three 40-ml portions of methylene chloride. The methylene chloride layers were combined, washed with 110 ml of water, and concentrated to an oily residue by distilling to 80°C. pot temperature. 300 ml of methanol was added and 170 ml of mixed solvent distilled off. Maintaining reflux, 50 ml of water were added as rapidly as possible.

The residue was then cooled slowly to 0°C. with agitation. The product precipitated and was removed by filtration, washed with two 60-ml portions of cold methanol water (3:1 volume/volume), and dried.

Other compounds which can be employed in the present methods include the following.

2'-bromo-4'-nitro-1,2,2,3,3,4,4,5,5-nonafluorocyclopenta ecarboxanilide
2'-chloro-4'-nitro-1,2,2,3,3,4,4,5,5 -nonafluorocyclopentanecarboxanilide
2'-iodo-4'-nitro-1,2,2,3,3,4,4 5,5-nonafluorocyclopentanecarboxanilide
2'-cyano-4' -chloro-1,2,2,3,3,4,4,5,5-nonafluorocyclopentanecarboxanilide
2',5' dichloro-4'-nitro-1,2,2,3,3,4,4,5,5-nonafluorocyclopent anecarboxanilide
2',3',4',5'-tetrachloro-1,2,2,3,3,4,4,5,5,-nonaflu rocyclopentanecarboxanilide
2',3',4',5',6',1,2,2,3, 3,4,4,5,5-tetradecafluorocyclopentanecarboxanilide
2'-bromo-4'-nitro-1,,2,2,3,3,4,4,5,5,6,6-undecafluorocyclohexanecarboxanilide, tris(2-hydroxyethyl)-ammonium salt
2'-bromo-4'-nitro-1,2,2,3,3,4,4,5,5,6,6-undecafluorocyclohexanecarboxanilide, tris(2-hydroxypropyl)-ammonium salt
2'-bromo-4'-nitro-1,2,2,3,3,4,4,5,5,6,6-undecafluorocyclohexanecarboxanilide, tris(3-hydroxypropyl)-ammonium salt.

Although all of the foregoing compounds exhibit very good activity against Diabrotica larvae, the compound 2'-bromo-4'-nitro-1,2,2,3,3,4,4,5,5,6,6-undecafluorocyclohexanecarboxanilide exhibits outstanding efficacy as a Diabrotica larvicidal agent. This compound can be employed as such or as one of the designated salts. Among the ammonium salts, preferred salts are those containing a total of not more than about 40 carbon atoms.

The present invention has as its objective the inhibition of Diabrotica larvae, by applying to the locus of the larvae an effective amount of a present agent. The inhibition will generally be a toxicant or insecticidal effect; however, crop protection can also be achieved by sub-lethal amounts which repel, inhibit feeding or the like.

The amount of present active agent which will inhibit Diabrotica larvae is not critical and will vary with a number of factors, including the particular compound or salt form, the degree of Diabrotica infestation, the nature of the soil, whether application is broadcast or branded, and the like. In general, good results can be achieved at soil concentrations of from 0.25 to 10 ppm, and generally from 0.25 to 1 ppm. Indeed, the present invention resides in the discovery that the present agents give excellent control of Diabrotica larvae at such unusually low concentrations.

For field applications, good results are achieved at broadcast rates of from about 0.5 to about 5.0 lbs/acre (0.56 kg/ha to 5.6 kg/ha). For banded application, i.e., application to only a band of soil including the planted row, good results are achieved at rates of from 0.12 to 1.2 ounces/one thousand linear row feed (3.4 g to 34 grams/305 meters of row).

## FORMULATIONS

The present Diabrotica larvicidal agents can be employed as such; but in accordance with industry procedures, they are preferably formulated with a suitable agriculturally acceptable carrier. Typically such a formulation will contain from about 0.05 to about 95.0 percent by weight of the active ingredient. Examples of such compositions include sprayable formulations, such as wettable powders, aqueous suspensions and emulsifiable concentrates; and solid compositions, such as dusts, granules, and dry-flowable pellets. The compounds can also be formulated with fertilizer and applied to soil to achieve both Diabrotica larvae control and fertilization of the crop.

Sprayable formulations are in the form of concentrated compositions which can be diluted with water to form water dispersions or emulsions containing in the range from 0.05 percent to 10 percent of the active agent by weight. Such water dispersions or emulsions are sprayed onto soil to control Diabrotica larvae. The concentrated compositions may be either solids, usually known as wettable powders or dry flowables, or liquids, usually known as emulsifiable concentrates and aqueous suspensions.

A typical wettable powder comprises an intimate mixture of an active ingredient of the invention, an inert carrier, and surfactants. The concentration of the active agent is usually from about 25 percent to about 90 percent by weight. The inert carrier is usually chosen from among the attapulgite clays, the montmorillonite clays, the diatomaceous earths, the kaolinites, or the purified silicates. Effective surfactants, comprising from about 0.5 percent to about 10 percent by weight of the wettable powder, are

chosen from among the condensed naphthalenesulfonates, the alkyl sulfates and the alkyl arylethoxylates. Suspending agents such as the sulfonated lignins can also be added.

A typical emulsifiable concentrate comprises from 0.1 to 6 pounds (from 0.045 kg to 3.05 kg) of a compound of the invention per gallon of liquid, dissolved in a mixture of organic solvents and emulsifiers. The organic solvent is chosen with regard to its solvency and its cost. Useful solvents include the aromatics, especially the xylenes and the heavy aromatic naphthas. Hydrophilic cosolvents such as DMF, cyclohexanone, and the glycol ethers such as 2-methoxyethanol may be included. Other organic solvents may also be used, including the terpenic solvents and kerosene; methyl heptyl ketone and other high molecular weight ketones; cyclohexyl acetate and other high molecular weight esters. Suitable emul sifiers for emulsifiable concentrates are chosen from the alkylbenzenesulfonates, naphthalenesulfonates, and nonionic surfactants such as alkylphenol adducts of polyoxyethylene, and are used at similar percentages as for wettable powders.

An aqueous suspension, or flowable, is comprised of a finely ground suspension of the active ingredient dispersed in a water based system. This type of formulation is particularly useful for compounds with low water solubility. The concentration of active agent is usually from about 15 to 60 percent by weight. A typical aqueous suspension may comprise wetting and dispersing agents, antifreeze components, thickening or bulking agents, as well as water and the active ingredient.

Dust compositions containing a compound of the present invention usually contain from 0.1 to 50 percent by weight of the compound. Dusts are prepared by intimately mixing and finely grinding the active agent with an inert solid such as ground montmorillonite clay, attapulgite clay, talc, ground volcanic rock, kaolin clay, or other inert, relatively dense, inexpensive substances.

Solid, granular compositions are convenient for the application of compounds of this invention to the soil and will contain the active agent in an amount from 0.1 to 25 percent by weight. Granules comprise a compound of the invention dispersed on a granular inert carrier such as coarsely ground clay of from 0.1 to 3 mm particle size. The active ingredient is most conveniently applied to the clay by dissolving it in an inexpensive solvent, such as acetone, methylene chloride, xylene or other petroleum solvents, methoxy propylene glycol, DMF, or the like, and applying the solution to the sized clay in an appropriate solids mixer. The solvent is then typically removed by evaporation; however removal is not essential. Alternatively, any of the present compounds which is an oil can be sprayed, with or without heating, directly onto clay. Likewise, any of the present compounds which is a solid can be melted and then sprayed directly onto clay.

The compounds serving as the present Diabrotica larvicidal agents have occasionally exhibited some phytotoxicity. To minimize the possibility of this effect on the emerging corn seedlings, as well as to delay the pesticidal effect until the time when Diabrotica larvae emerge, it may be preferred that the granular formulation provide only slow release, or delayed release, or both effects simultaneously. Methods of achieving these effects are known in the formulation art.

The present Diabrotica larvicidal agents, in whatever formulation, are applied to soil in conventional fashion by any of the many mechanical devices for application. Because of the desirability of minimizing passage through the field, the present agents can be applied in combination with other materials, such as fertilizers, herbicides, and the like.

The present methods are illustrated by the following examples.

Southern Corn Rootworm - Screen

A presoaked corn seed, 15 grams of dry sandy soil, and 2 ml of tap water were mixed in a one-ounce plastic container. The mixture was then treated with 1 ml of a formulation containing the test compound and subsequently permitted to dry for 6-12 hours. The concentration of each test compound in the soil was 12 ppm. Five larvae of southern corn rootworm were added to each container, which was then capped and held at 23°C. Mortality was recorded at four days post-treatment. Data are recorded in Table I.

Table I

Southern Corn Rootworm - Screen

| Example No. | Percent Mortality |
|---|---|
| 1 | 100 |
| 3 | 100 |
| 8 | 100 |
| 10 | 100 |
| 11 | 100 |
| 12 | 100 |
| 18 | 100 |
| 19 | 100 |
| 20 | 100 |
| 21 | 100 |
| 23 | 100 |
| 24 | 100 |
| 25 | 100 |

Table I cont'd.

Southern Corn Rootworm - Screen

| Example No. | Percent Mortality |
|---|---|
| 26 | 100 |
| 27 | 100 |
| 28 | 100 |
| 29 | 100 |
| 30 | 100 |
| 31 | 100 |
| 32 | 100 |
| 33 | 100 |
| 34 | 100 |
| 35 | 100 |
| 36 | 100 |
| 37 | 100 |
| 38 | 100 |
| 39 | 100 |
| 40 | 100 |
| 42 | 100 |
| 43 | 80 |
| 44 | 100 |

Southern Corn Rootworm - Secondary Test

In a secondary test, selected compounds were evaluated against southern corn rootworm (or reevaluated in the instance of those compounds already tested against southern corn rootworm, as reported in Table I). The test method was the same as described above, with the exception that the compounds were tested at differing concentrations, that two replicates per treatment were carried out, and that mortality ratings were made at differing numbers of days after treatment. The results were as set forth in the following table.

## Table II

### Southern Corn Rootworm - Secondary Test

| Example # | PPM of Compound | Percent Control | Days post-Treatment |
|---|---|---|---|
| 1 | 1.25 | 100 | 4 |
| | 0.625 | 100 | 4 |
| | 0.312 | 80 | 4 |
| | 0.156 | 30 | 4 |
| | 10 | 100 | 2 |
| | 5 | 100 | 2 |
| | 2.5 | 100 | 2 |
| | 1.25 | 100 | 2 |
| | 1.25 | 100 | 4 |
| | 0.625 | 100 | 4 |
| | 0.312 | 80 | 4 |
| | 0.156 | 30 | 4 |
| | 0.625 | 80 | 4 |
| | 0.312 | 0 | 4 |
| | 0.156 | 0 | 4 |
| | 10 | 100 | 2 |
| | 5 | 100 | 2 |
| | 2.5 | 100 | 2 |
| | 1.25 | 100 | 2 |
| | 0.625 | 100 | 2 |
| | 0.312 | 100 | 2 |
| | 0.156 | 80 | 2 |
| | 0.078 | 30 | 2 |
| | 10 | 100 | 2 |
| | 5 | 100 | 2 |
| | 2.5 | 100 | 2 |
| | 1.25 | 100 | 2 |
| | 0.625 | 100 | 2 |
| | 0.312 | 100 | 2 |
| | 0.156 | 40 | 2 |
| | 0.078 | 20 | 2 |

Table II cont'd.

Southern Corn Rootworm - Secondary Test

| Example # | PPM of Compound | Percent Control | Days post-Treatment |
|---|---|---|---|
| 1 | 10 | 100 | 2 |
| | 5 | 100 | 2 |
| | 2.5 | 100 | 2 |
| | 1.25 | 100 | 2 |
| | 0.625 | 100 | 2 |
| | 0.312 | 100 | 2 |
| | 0.156 | 100 | 2 |
| | 3.0 | 100 | 4 |
| | 1.5 | 100 | 4 |
| | 0.75 | 100 | 4 |
| | 0.38 | 100 | 4 |
| 2 | 10 | 100 | 4 |
| | 5.0 | 100 | 4 |
| | 2.5 | 100 | 4 |
| | 1.25 | 100 | 4 |
| | 1.25 | 100 | 4 |
| | 0.625 | 70 | 4 |
| | 0.312 | 0 | 4 |
| | 0.156 | 0 | 4 |
| | 5.0 | 100 | 4 |
| | 2.5 | 100 | 4 |
| | 1.25 | 100 | 4 |
| | 0.312 | 100 | 4 |
| | 0.75 | 80 | 3 |
| | 0.38 | 70 | 3 |
| | 0.19 | 50 | 3 |
| | 0.09 | 0 | 3 |
| | 0.04 | 0 | 3 |
| | 0.02 | 0 | 3 |
| | 3.0 | 100 | 4 |
| | 1.5 | 100 | 4 |
| | 0.75 | 70 | 4 |
| | 0.38 | 50 | 4 |

Table II cont'd.

Southern Corn Rootworm - Secondary Test

| Example # | PPM of Compound | Percent Control | Days post-Treatment |
|---|---|---|---|
| 3 | 0.75 | 100 | 3 |
| | 0.38 | 100 | 3 |
| | 0.19 | 60 | 3 |
| | 0.09 | 10 | 3 |
| 4 | 10 | 100 | 5 |
| | 5.0 | 100 | 4 |
| | 2.5 | 100 | 4 |
| | 1.25 | 100 | 4 |
| | 5.0 | 100 | 4 |
| | 2.5 | 100 | 4 |
| | 1.25 | 100 | 4 |
| | 0.625 | 90 | 4 |
| | 0.312 | 50 | 4 |
| | 0.156 | 40 | 4 |
| | 0.078 | 20 | 4 |
| | 6.0 | 100 | 4 |
| | 3.0 | 100 | 4 |
| | 1.5 | 100 | 4 |
| | 0.75 | 70 | 4 |
| | 0.75 | 70 | 5 |
| | 0.38 | 0 | 5 |
| | 0.19 | 0 | 5 |
| 5 | 10 | 100 | 4 |
| | 5.0 | 100 | 4 |
| | 2.5 | 100 | 4 |
| | 1.25 | 100 | 4 |
| | 0.625 | 100 | 4 |
| | 0.312 | 90 | 4 |

Table II cont'd.

Southern Corn Rootworm - Secondary Test

| Example # | PPM of Compound | Percent Control | Days post-Treatment |
|---|---|---|---|
| 5 | 2.5 | 100 | 4 |
| | 1.25 | 100 | 4 |
| | 0.625 | 100 | 4 |
| | 0.312 | 100 | 4 |
| | 0.156 | 100 | 4 |
| | 0.078 | 40 | 4 |
| | 0.039 | 10 | 4 |
| 6 | 5.0 | 100 | 4 |
| | 5.0 | 100 | 4 |
| | 2.5 | 100 | 4 |
| | 1.25 | 70 | 4 |
| | 5.0 | 100 | 4 |
| | 2.5 | 100 | 4 |
| | 1.25 | 100 | 4 |
| | 0.625 | 100 | 4 |
| | 0.312 | 50 | 4 |
| | 0.156 | 20 | 4 |
| | 0.75 | 100 | 3 |
| | 0.38 | 80 | 3 |
| | 0.19 | 40 | 3 |
| | 0.09 | 20 | 3 |
| | 6.0 | 100 | 3 |
| | 3.0 | 100 | 3 |
| | 1.5 | 100 | 3 |
| 7 | 6.0 | 100 | 4 |
| | 3.0 | 100 | 4 |
| | 1.5 | 100 | 4 |
| | 0.75 | 100 | 4 |

Table II cont'd.

Southern Corn Rootworm - Secondary Test

| Example # | PPM of Compound | Percent Control | Days post-Treatment |
|---|---|---|---|
| 7 | 0.75 | 100 | 5 |
| | 0.38 | 20 | 5 |
| | 0.19 | 0 | 5 |
| | 0.09 | 0 | 5 |
| 8 | 12.0 | 100 | 4 |
| | 0.75 | 100 | 3 |
| | 0.38 | 80 | 3 |
| | 0.19 | 70 | 3 |
| | 0.09 | 50 | 3 |
| 9 | 12.0 | 100 | 5 |
| | 6.0 | 100 | 5 |
| | 3.0 | 100 | 5 |
| | 1.5 | 90 | 5 |
| | 0.75 | 70 | 5 |
| | 0.38 | 55 | 5 |
| 10 | 12.0 | 100 | 4 |
| | 6.0 | 100 | 4 |
| | 3.0 | 100 | 4 |
| | 1.5 | 100 | 4 |
| | 0.75 | 100 | 4 |
| | 0.38 | 60 | 4 |
| | 0.19 | 0 | 4 |
| | 0.09 | 0 | 4 |
| | 0.045 | 0 | 4 |
| 11 | 12.0 | 100 | 4 |
| | 6.0 | 100 | 4 |
| | 3.0 | 100 | 4 |
| | 1.5 | 100 | 4 |
| | 0.75 | 100 | 4 |
| | 0.38 | 70 | 4 |
| | 0.19 | 0 | 4 |
| | 0.09 | 0 | 4 |
| | 0.045 | 0 | 4 |

Table II cont'd.

Southern Corn Rootworm - Secondary Test

| Example # | PPM of Compound | Percent Control | Days post-Treatment |
|---|---|---|---|
| 12 | 0.75 | 80 | 3 |
| | 0.38 | 30 | 3 |
| | 0.19 | 0 | 3 |
| | 0.09 | 0 | 3 |
| 13 | 10 | 100 | 4 |
| | 5.0 | 100 | 4 |
| | 2.5 | 100 | 4 |
| | 1.25 | 100 | 4 |
| | 5.0 | 100 | 4 |
| | 2.5 | 100 | 4 |
| | 1.25 | 100 | 4 |
| | 0.625 | 100 | 4 |
| | 0.312 | 100 | 4 |
| | 0.156 | 90 | 4 |
| | 0.078 | 90 | 4 |
| | 2.5 | 100 | 2 |
| | 1.25 | 100 | 2 |
| | 0.625 | 100 | 2 |
| | 0.312 | 90 | 2 |
| | 0.156 | 60 | 2 |
| | 0.078 | 20 | 2 |
| | 2.5 | 100 | 4 |
| | 1.25 | 100 | 4 |
| | 0.625 | 100 | 4 |
| | 0.312 | 100 | 4 |
| | 0.156 | 60 | 4 |
| | 0.078 | 40 | 4 |

Table II cont'd.

Southern Corn Rootworm - Secondary Test

| Example # | PPM of Compound | Percent Control | Days post-Treatment |
|---|---|---|---|
| 14 | 3.0 | 100 | 1 |
| | 1.5 | 100 | 1 |
| | 0.75 | 80 | 1 |
| | 0.38 | 20 | 1 |
| | 3.0 | 100 | 5 |
| | 1.5 | 100 | 5 |
| | 0.75 | 80 | 5 |
| | 0.38 | 80 | 5 |
| | 1.0 | 53 | 4 |
| | 0.5 | 0 | 4 |
| | 0.25 | 0 | 4 |
| 15 | 6.0 | 100 | 4 |
| | 3.0 | 100 | 4 |
| | 1.5 | 100 | 4 |
| | 1.5 | 90 | 2 |
| | 0.75 | 100 | 2 |
| | 0.38 | 100 | 2 |
| | 0.19 | 70 | 2 |
| | 1.5 | 60 | 3 |
| | 0.75 | 40 | 3 |
| | 0.38 | 0 | 3 |
| | 0.19 | 0 | 3 |
| 16 | 3.0 | 100 | 1 |
| | 1.5 | 90 | 1 |
| | 0.75 | 90 | 1 |
| | 0.38 | 0 | 1 |
| | 3.0 | 100 | 5 |
| | 1.5 | 100 | 5 |
| | 0.75 | 90 | 5 |
| | 0.38 | 60 | 5 |

Table II cont'd.

Southern Corn Rootworm - Secondary Test

| Example # | PPM of Compound | Percent Control | Days post-Treatment |
|---|---|---|---|
| 17 | 1.5 | 100 | 4 |
| | 0.75 | 100 | 4 |
| | 0.38 | 100 | 4 |
| | | | |
| | 0.75 | 100 | 3 |
| | 0.38 | 90 | 3 |
| | 0.19 | 10 | 3 |
| | 0.09 | 10 | 3 |
| | 0.045 | 20 | 3 |
| | | | |
| | 1.5 | 80 | 3 |
| | 0.75 | 50 | 3 |
| | 0.38 | 20 | 3 |
| | 0.19 | 0 | 3 |
| | | | |
| 18 | 6.0 | 100 | 1 |
| | 3.0 | 100 | 1 |
| | 1.5 | 10 | 1 |
| | 0.75 | 0 | 1 |
| | 0.38 | 0 | 1 |
| | 0.19 | 0 | 1 |
| | | | |
| | 6.0 | 100 | 3 |
| | 3.0 | 100 | 3 |
| | 1.5 | 100 | 3 |
| | 0.75 | 80 | 3 |
| | 0.38 | 0 | 3 |
| | 0.19 | 0 | 3 |
| | | | |
| 19 | 6.0 | 100 | 4 |
| | 3.0 | 100 | 4 |
| | 1.5 | 20 | 4 |
| | 0.75 | 0 | 4 |
| | | | |
| | 3.0 | 100 | 4 |
| | 1.5 | 90 | 4 |
| | 0.75 | 70 | 4 |
| | 0.38 | 30 | 4 |

Table II cont'd.

Southern Corn Rootworm - Secondary Test

| Example # | PPM of Compound | Percent Control | Days post-Treatment |
|---|---|---|---|
| 20 | 6.0 | 100 | 4 |
| | 3.0 | 100 | 4 |
| | 1.5 | 100 | 4 |
| | | | |
| | 1.5 | 100 | 2 |
| | 0.75 | 100 | 2 |
| | 0.38 | 70 | 2 |
| | 0.19 | 40 | 2 |
| | | | |
| 21 | 6.0 | 100 | 4 |
| | 3.0 | 100 | 4 |
| | 1.5 | 100 | 4 |
| | | | |
| | 0.75 | 100 | 4 |
| | 0.38 | 70 | 4 |
| | 0.19 | 80 | 4 |
| | | | |
| | 6.0 | 100 | 1 |
| | 3.0 | 100 | 1 |
| | 1.5 | 0 | 1 |
| | 0.75 | 10 | 1 |
| | 0.38 | 0 | 1 |
| | 0.19 | 0 | 1 |
| | | | |
| | 6.0 | 100 | 3 |
| | 3.0 | 100 | 3 |
| | 1.5 | 100 | 3 |
| | 0.75 | 80 | 3 |
| | 0.38 | 40 | 3 |
| | 0.19 | 20 | 3 |
| | | | |
| | 0.75 | 95 | 1 |
| | 0.38 | 80 | 1 |
| | 0.19 | 35 | 1 |
| | 0.09 | 5 | 1 |

Table II cont'd.

Southern Corn Rootworm - Secondary Test

| Example # | PPM of Compound | Percent Control | Days post-Treatment |
|---|---|---|---|
| 21 | 0.75 | 100 | 3 |
| | 0.38 | 85 | 3 |
| | 0.19 | 40 | 3 |
| | 0.09 | 10 | 3 |
| 22 | 3.0 | 100 | 1 |
| | 1.5 | 90 | 1 |
| | 0.75 | 90 | 1 |
| | 0.38 | 20 | 1 |
| | 3.0 | 100 | 5 |
| | 1.5 | 100 | 5 |
| | 0.75 | 100 | 5 |
| | 0.38 | 60 | 5 |
| 23 | 6.0 | 100 | 3 |
| | 3.0 | 100 | 3 |
| | 1.5 | 100 | 3 |
| | 0.75 | 60 | 3 |
| | 0.38 | 40 | 3 |
| | 0.19 | 20 | 3 |
| 24 | 1.5 | 100 | 3 |
| | 0.75 | 70 | 3 |
| | 0.38 | 70 | 3 |
| | 0.19 | 50 | 3 |
| | 0.09 | 20 | 3 |
| 25 | 6.0 | 100 | 3 |
| | 3.0 | 100 | 3 |
| | 1.5 | 80 | 3 |
| | 0.75 | 20 | 3 |
| | 0.38 | 20 | 3 |
| | 0.19 | 10 | 3 |

Table II cont'd.

Southern Corn Rootworm - Secondary Test

| Example # | PPM of Compound | Percent Control | Days post-Treatment |
|---|---|---|---|
| 26 | 1.5 | 100 | 3 |
| | 0.75 | 100 | 3 |
| | 0.38 | 100 | 3 |
| | 0.19 | 100 | 3 |
| | 0.09 | 70 | 3 |
| 27 | 1.5 | 100 | 3 |
| | 0.75 | 100 | 3 |
| | 0.38 | 100 | 3 |
| | 0.19 | 90 | 3 |
| | 0.09 | 30 | 3 |
| 28 | 6.0 | 100 | 4 |
| | 3.0 | 100 | 4 |
| | 1.5 | 100 | 4 |
| | 0.75 | 100 | 4 |
| | 0.38 | 100 | 4 |
| | 0.19 | 40 | 4 |
| | 0.09 | 0 | 4 |
| 29 | 1.5 | 100 | 3 |
| | 0.75 | 100 | 3 |
| | 0.38 | 100 | 3 |
| | 0.19 | 70 | 3 |
| | 0.09 | 50 | 3 |
| 30 | 6.0 | 100 | 3 |
| | 3.0 | 100 | 3 |
| | 1.5 | 100 | 3 |
| | 0.75 | 100 | 3 |
| | 0.38 | 100 | 3 |
| | 1.5 | 100 | 3 |
| | 0.75 | 100 | 3 |
| | 0.38 | 50 | 3 |
| | 0.19 | 0 | 3 |
| | 0.09 | 0 | 3 |
| | 0.045 | 0 | 3 |

Table II cont'd.

Southern Corn Rootworm - Secondary Test

| Example # | PPM of Compound | Percent Control | Days post-Treatment |
|---|---|---|---|
| 31 | 6.0 | 100 | 4 |
| | 3.0 | 100 | 4 |
| | 1.5 | 60 | 4 |
| | | | |
| | 3.0 | 100 | 4 |
| | 1.5 | 80 | 4 |
| | 0.75 | 50 | 4 |
| | 0.38 | 30 | 4 |
| 32 | 6.0 | 100 | 4 |
| | 3.0 | 100 | 4 |
| | 1.5 | 100 | 4 |
| | 0.75 | 90 | 4 |
| | 0.38 | 80 | 4 |
| | 0.19 | 60 | 4 |
| | 0.09 | 10 | 4 |
| 33 | 6.0 | 100 | 4 |
| | 3.0 | 100 | 4 |
| | 1.5 | 100 | 4 |
| | 0.75 | 100 | 4 |
| | 0.38 | 90 | 4 |
| | 0.19 | 10 | 4 |
| | 0.09 | 0 | 4 |
| 34 | 6.0 | 100 | 2 |
| | 3.0 | 100 | 2 |
| | 1.5 | 100 | 2 |
| | 0.75 | 100 | 2 |
| | 0.38 | 70 | 2 |
| | 0.19 | 60 | 2 |
| 35 | 6.0 | 100 | 4 |
| | 3.0 | 100 | 4 |
| | 1.5 | 100 | 4 |
| | 0.75 | 70 | 4 |
| | 0.38 | 10 | 4 |
| | 0.19 | 0 | 4 |
| | 0.09 | 0 | 4 |

Table II cont'd.

Southern Corn Rootworm - Secondary Test

| Example # | PPM of Compound | Percent Control | Days post-Treatment |
|---|---|---|---|
| 36 | 6.0 | 100 | 2 |
| | 3.0 | 100 | 2 |
| | 1.5 | 100 | 2 |
| | 0.75 | 100 | 2 |
| | 0.38 | 100 | 2 |
| | 0.19 | 40 | 2 |
| 37 | 6.0 | 100 | 3 |
| | 3.0 | 100 | 3 |
| | 1.5 | 100 | 3 |
| | 0.75 | 100 | 3 |
| | 0.38 | 100 | 3 |
| | 0.19 | 100 | 3 |
| | 0.75 | 100 | 3 |
| | 0.38 | 100 | 3 |
| | 0.19 | 100 | 3 |
| | 0.09 | 70 | 3 |
| | 0.04 | 30 | 3 |
| | 0.02 | 0 | 3 |
| 38 | 6.0 | 100 | 3 |
| | 3.0 | 100 | 3 |
| | 1.5 | 100 | 3 |
| | 0.75 | 100 | 3 |
| | 0.38 | 100 | 3 |
| | 0.19 | 90 | 3 |
| | 0.09 | 40 | 3 |
| 39 | 6.0 | 100 | 3 |
| | 3.0 | 100 | 3 |
| | 1.5 | 100 | 3 |
| | 0.75 | 80 | 3 |
| | 0.38 | 60 | 3 |
| | 0.19 | 10 | 3 |

Table II cont'd.

Southern Corn Rootworm - Secondary Test

| Example # | PPM of Compound | Percent Control | Days post-Treatment |
|---|---|---|---|
| 40 | 3.0 | 100 | 3 |
| | 1.5 | 100 | 3 |
| | 0.75 | 60 | 3 |
| | 0.38 | 0 | 3 |
| | 0.19 | 0 | 3 |
| | 0.09 | 0 | 3 |
| 41 | 6.0 | 100 | 4 |
| | 3.0 | 100 | 4 |
| | 1.5 | 100 | 4 |
| | 1.5 | 100 | 2 |
| | 0.75 | 50 | 2 |
| | 0.38 | 10 | 2 |
| | 0.19 | 0 | 2 |
| 42 | 0.75 | 50 | 3 |
| | 0.38 | 10 | 3 |
| | 0.19 | 10 | 3 |
| | 0.09 | 0 | 3 |
| 43 | 3.0 | 60 | 3 |
| | 1.5 | 0 | 3 |
| | 0.75 | 0 | 3 |
| | 0.38 | 0 | 3 |
| | 0.19 | 0 | 3 |
| | 0.09 | 0 | 3 |
| 44 | 3.0 | 100 | 3 |
| | 1.5 | 100 | 3 |
| | 0.75 | 80 | 3 |
| | 0.38 | 60 | 3 |
| | 0.19 | 0 | 3 |

Southern Corn Rootworm-Residual Test

Selected compounds were evaluated for residual control of southern corn rootworm. The test was conducted as follows. Each compound was dissolved in acetone, sprayed onto soil, and mixed well. The soil was added, in a 1" deep layer, to pots already containing 3" of untreated soil with 3 corn seeds on top. The pots were held under normal greenhouse conditions for 21 days, at which time average crown root length measurements were made, on a minimum of 9 plants per treatment. Additionally, all soil was removed from each pot, mixed well, and bioassayed with 3rd-instar southern corn rootworm larvae. There were three replicates per treatment.

Phytotoxicity was evaluated in either of two methods. In a first method, used for most of the tests, the average crown root length was determined; crown root length in the controls varied from about 110 to about 150 mm and averaged about 120 mm. In the second method, crown root area was measured by a LI-COR Model LI-3000 portable area meter, with the controls regarded as 100 percent and other treatments reported as a percent of control.

## Table III

### Southern Corn Rootworm-Residual

| Treatment, Example # | Avg. Crown Root Length (mm) 8 | 4 | 2 | 1 | Percent Mortality Corn Rootworm (ppm) 8 | 4 | 2 | 1 |
|---|---|---|---|---|---|---|---|---|
| 1 | 20 | 31 | 55 | | 96 | 53 | 41 | |
| 1 | 6* | 35* | 45* | 53* | 100 | 100 | 100 | 100 |
| 2 | 24 | 37 | 43 | | 100 | 93 | 53 | |
| 3 | 13 | 26 | 27 | | 100 | 100 | 100 | |
| 4 | 68 | 81 | 114 | | 60 | 33 | 27 | |
| 6 | 108 | 117 | 96 | | 93 | 60 | 27 | |
| 7 | 48 | 67 | 95 | | 73 | 53 | 13 | |
| 10 | 3* | 7* | 18* | 20* | 100 | 100 | 100 | 100 |
| 11 | 13* | 17* | 26* | 37* | 100 | 100 | 100 | 100 |
| 12 | 24 | 40 | 50 | | 100 | 53 | 33 | |
| 14 | 26 | 40 | 53 | | 53 | 0 | 0 | |
| 15 | 25 | 25 | 58 | | 100 | 100 | 33 | |
| 16 | 15 | 16 | 26 | | 100 | 100 | 100 | |
| 17 | 15 | 18 | 41 | | 100 | 100 | 100 | |
| 18 | 25 | 48 | 58 | | 100 | 100 | 20 | |
| 20 | 29 | 63 | 65 | | 100 | 40 | 27 | |
| 21 | 32 | 37 | 58 | | 100 | 100 | 67 | |
| 22 | 19 | 47 | 57 | | 40 | 70 | 0 | |
| 26 | 15 | 26 | 46 | | 100 | 100 | 47 | |
| 27 | 16 | 36 | 55 | | 100 | 80 | 60 | |
| 28 | 11 | 17 | 53 | | 100 | 100 | 100 | |
| 29 | 20 | 41 | 69 | | 100 | 100 | 53 | |
| 32 | 17 | 37 | 40 | | 100 | 93 | 47 | |
| 34 | 30 | 58 | 77 | | 30 | 58 | 77 | |
| 36 | 27 | 51 | 70 | | 93 | 53 | 40 | |
| 37 | 44 | 68 | 74 | | 53 | 20 | 0 | |
| 38 | 25 | 33 | 61 | | 80 | 33 | 0 | |
| 39 | 14 | 28 | 75 | | 100 | 100 | 93 | |

* % of Crown roots

Corn Rootworm - Field Tests

The compound of Example 1 was evaluated for the control of corn rootworm at eight different locations throughout the corn belt of the United States; each location was known to have a natural infestation of Diabrotica spp. One site included two separate tests, for a total of nine separate tests. The compound was formulated for these tests as a 2% granule, as described below in Example H. Each of the nine tests consisted of four replicates, each one row of approximately 50-60' 1 foot = 30,5 cm length. The corn was planted in late-April through early-May in accordance with local conditions. At the same time, the granular formulation containing the compound of Example 1 was applied in a 1 inch = 2.54 cm 7" band at the following rates:
1 lb = 453.6 gm
0.25 lb/A (0.85 grams a.i./100 ft)
0.5 lb/A (1.7 grams a.i./100 ft)
1.0 lb/A (3.4 grams a.i./100 ft)
2.0 lb/A (6.8 grams a.i./100 ft)
(100 ft = 30.5 meters)
Application was typically by a Gandy Line Tender; at one of the sites, application was made manually by a shaker can. Observations were made for injury due to corn rootworm, crop stand, early root injury rating, and early crop injury rating. Results were as set forth in the following tables, which are averages of the nine tests.

Table IV

Corn Rootworm-Field Tests

| Rating | Treatment | | | | | |
|---|---|---|---|---|---|---|
| | — | Isofen-phos | Compound of Example 1 (lb/A) | | | |
| | (control) | (1 lb/A) | 0.25 | 0.5 | 1 | 2 |
| Injury due to rootworm (scale of 1-6)* | 4.3 | 1.9 | 2.8 | 2.3 | 1.9 | 1.7 |
| Crop Stands | 100 | 102 | 103 | 94 | 89 | 79 |
| Early root injury rating (scale of 0-10) | 0 | 0.1 | 0.6 | 0.9 | 1.6 | 2.9 |
| Early crop injury rating (scale of 0-10) | 0 | 0.3 | 0.2 | 0.9 | 1.3 | 2.5 |

*for tests in which ratings in controls were 3 or greater
1 = no feeding, 6 = maximum injury

Additional field trials were conducted with the compounds of Examples 1 and 29. The trials were conducted throughout the midwestern U.S. Both compounds were efficacious (although the compound of Example 29 was less so) at rates up to 3.4 g/100 feet (1 lb/acre 1 acre = 4.05.10$^3$ m$^2$), applied as a 10% granule or as a 1EC, applied either branded or broadcast. Post presswheel application was necessary to provide the best margin of safety for the branded applications.

Formulations suitable for implementing the present invention were prepared as described below.

EXAMPLE A

Emulsifiable Concentrate

A 1 lb/gallon emulsifiable concentrate was prepared by dissolving the compound of Example 1, estimated to be of 97% purity, in xylene and adding Toximul H and Toximul D (each of Toximul H and Toximul D is a sulfonate-nonionic blend of emulsifiers produced by Stepan Chemical Co.)

| Ingredient | Percent by Weight |
|---|---|
| Compound of Example 1 | 13.2 |
| Xylene | 81.8 |
| Toximul H | 3.0 |
| Toximul D | 2.0 |

EXAMPLE B

Wettable Powder

A 20% wettable powder of the compound of Example 1 was prepared by mixing the first five listed ingredients in conventional fashion. After these ingredients had been mixed, 3% of Selogen HR (a dispersing agent produced by Diamond Shamrock) and 3% of a mixture of

(1) 22% of TMN-6, a surfactant sold by Union Carbide, trimethylnonane/6 moles of ethylene oxide,
(2) 28% of Triton X-100®, a surfactant sold by Rohm & Haas, octylphenol/10 moles of ethylene oxide, and
(3) 50% of HiSil, a lightweight silica sold by Pittsburg Plate Glass Co.

were added and blended until uniform. The ingredients and the % of each in the final formulation were as follows.

| Ingredient | Percent by weight |
|---|---|
| Compound of Example 1, 95% purity | 21.06 |
| Stepanol ME, sodium lauryl sulfate from Stepan Chemical Co. | 4.72 |
| Polyfon O, a dispersant from Westvaco Corp., Polychemicals Dept. | 4.72 |
| Zeolex-7, a sodium silicoaluminate from J.H. Huber Corp. | 4.72 |
| Barden's clay, a kaolinite from J. M. Huber Corp. | 58.78 |
| Selogen HR | 3.00 |
| Mixture of TMN-6, Triton X-100, and HiSil | 3.00 |

EXAMPLES C-F

1%-10% Granules

A series of four granular formulations of the compound of Example 1 was prepared. In each instance, the appropriate amount of the compound was dissolved in acetone, at the rate of 1 gram of compound per 2 grams of acetone, and the resulting solution was sprayed onto clay under agitation. Thereafter, the acetone was evaporated to provide the final formulation. The clay employed in this series of granular formulations was 30/60 mesh Florex RVM (RVM = regular volatile material), an attapulgite clay produced by the Floridin Co. The compound of Example 1 was estimated to be of 97% purity. The specific granular formulations so produced, each in 50-gram quantity, were as follows.

1% Granule

| Ingredient | Percent by weight |
| --- | --- |
| Compound of Example 1 | 1.03 |
| clay | 98.97 |

2.5% Granule

| Ingredient | Percent by weight |
| --- | --- |
| Compound of Example 1 | 2.58 |
| clay | 97.42 |

5.0% Granule

| Ingredient | Percent by weight |
| --- | --- |
| Compound of Example 1 | 5.15 |
| clay | 94.85 |

10% Granule

| Ingredient | Percent by weight |
| --- | --- |
| Compound of Example 1 | 10.31 |
| clay | 89.69 |

EXAMPLE G

20% Granule

A 20% granular formulation of the compound of Example 1 was also prepared. The preparation was the same as described in the immediately preceding series, except that the compound was dissolved in acetone, 1.5 grams of acetone per gram of compound of Example 1. Propylene glycol was then added to the solution, and the acetone was removed by evaporation as in prior examples. The compound of Example 1 which was used in this formulation was estimated to be of 98% purity. The final formulation, in the amount of 105 grams, was as follows.

| Ingredient | Percent by weight |
|---|---|
| Compound of Example 1 | 20.460 |
| propylene glycol | 5.0 |
| clay | 74.54 |

EXAMPLE H

2% Granule

A 2% granular formulation of the compound of Example 1 was also prepared. Again, the procedure used was as reported above. However, 2.5 grams of acetone were employed in dissolving each gram of the compound of Example 1. The compound of Example 1 employed in this formulation was estimated to be of 95% purity. The resulting formulation, in the amount of 19.1 kg, was as follows.

| Ingredient | Percent by weight |
|---|---|
| Compound of Example 1 | 2.1 |
| Propylene glycol | 5.0 |
| clay | 92.9 |

EXAMPLE I

2% Granule

Another 2% granular formulation of the compound of Example 1 was prepared, in the same procedure except that 4 grams of acetone were used in dissolving each gram of the compound of Example 1; the estimated purity of the compound of Example 1 was 97%; and the clay employed was 24/48 mesh Florex, also produced by the Floridin Co.

| Ingredient | Percent by weight |
|---|---|
| Compound of Example 1 | 2.06 |
| Propylene glycol | 5.0 |
| clay | 92.94 |

EXAMPLE J

10% Granule

A 10% granular formulation of the compound of Example 1 was prepared as for the last-described granule, except that the clay employed in this formulation was Oil-Dri 30/40 mesh Mississippi Grey clay RVM (RVM = regular volatile material). The compound of Example 1 which was employed in this formulation was estimated to be of 95% purity. The final formulation, in the amount of 4.5 kg, was as follows.

| Ingredient | Percent by weight |
|---|---|
| Compound of Example 1 | 10.3 |
| Propylene glycol | 5.0 |
| Oil-Dri Mississippi Grey clay RVM, 30/40 mesh | 84.7 |

EXAMPLE K

10% Granule

A granular formulation of the compound of Example 1 was also prepared employing plaster of paris as the carrier. Compound of Example 1 was ground in a mortar and pestle with plaster of paris. Water was then added to make a paste, which was spread thinly over a flat surface, allowed to harden, and broken up into small pieces and sieved, 24/28 "Tyler" mesh. The final formulation was as follows.

10% Granule

| Ingredient | Percent by weight |
|---|---|
| Compound of Example 1 | 8.6 |
| Plaster of paris | 77.3 |
| Theoretical moisture retained if fully dried | 14.1 |

EXAMPLE L

10% Granule

Another granular formulation was prepared in accordance with the foregoing procedures, except that the active ingredient was the compound of Example 17, in estimated purity of 100%. The final formulation was as follows.

| Ingredient | Percent by weight |
|---|---|
| Compound of Example 17 | 10.0 |
| Propylene glycol | 5.0 |
| Oil-Dri Mississippi Grey Clay, 30/40 mesh (RVM) | 85.0 |

EXAMPLE M

10% Granule on various carriers

A series of granular formulations of the compound of Example 29 was prepared. In each instance, the compound, estimated to be of 100% purity, was dissolved in dichloromethane, yielding a 20% solution of the compound of Example 29. A portion of this solution was poured onto each of numerous carriers, mixed well, and air dried to remove the dichloromethane. All of the resulting formulations had the same compoition, as follows.

10% Granule

| Ingredient | Percent by weight |
|---|---|
| Compound of Example 29 | 10% |
| carrier, 30/40 mesh | 90% |

The carriers utilized in these formulations, and their sources, were as follows:
Oil-Dri Mississippi Grey clay (this same clay is also referred to as Agsorb RVM-MS);
Oil-Dri Mississippi Brown clay (this same clay is also referred to as Agsorb LVM-MS);
Oil-Dri Georgia white clay - Oil-Dri Corporation Florex RVM;
Florex LVM - Floridin Company
(LVM = low volatile material)
Agsorb LVM - Oil-Dri Corporation
Attapulgus RVM - Engelhardt Minerals
Bentonite Granular -American Colloid
Pike's Peak clay (9-J) - General Reduction Corp.
KWK Volclay - American Colloid
Lowe's Oran, Missouri clay;
Lowe's Bloomfield, Missouri clay - Lowe's
Industrial Products, Inc.
Based on this and other studies, Oil-Dri Mississippi Grey Clay and Oil-Dri Mississippi Brown Clay are regarded as the preferred carriers for the parent compounds. For salts, Florex LVM clay and Lowe's Oran, Missouri clay are preferred.

EXAMPLE N

10% Slow Release Granule

A representative slow-release formulation was prepared by dissolving the compound of Example 1, estimated purity of 97%, in acetone at the rate of 1 gram of compound per 4 grams of acetone. The resulting solution was applied to granules of Oil-Dri Mississippi Grey clay, 30/40 mesh, and the acetone was then evaporated off. The granules were then treated with a solution of 5 parts of Carboset 525 (a polyacrylic acid sold by B.F. Goodrich) in 225 parts of a dilute solution of ammonium hydroxide. The treatment consisted of pouring a sixth of the Carboset solution over the granules, mixing well, and drying in a fluid bed drier; the procedure was repeated until all of the Carboset solution had been applied to the granules. The final formulation was as follows.

| Ingredient | Percent by weight |
|---|---|
| Compound of Example 1 | 10.3 |
| Carboset 525 | 5.0 |
| Oil-Dri Mississippi Grey Clay, 30/40 mesh | 84.7 |

EXAMPLE O

10% Slow Release Granule

A 10% slow release granule was made employing the compound of Example 1, Carboset 525, and Florex 20/30 mesh RVM clay. A solution of NaOH was added to another portion of the Carboset 525/$NH_4OH$ solution described in the preceding example, and mixed well. Thereafter, compound of Example 1 was dissolved in acetone and also added and mixed well. The resulting solution was added portionwise to the carrier, by adding one-third of the solution, mixing well and drying, then repeating these steps with the remaining portions. The resulting granule was screened through 20 and 30 mesh screens, and had the following composition.

| Ingredient | Percent by Weight |
|---|---|
| Compound of Example 1 (97% purity) | 10.310 |
| Carboset 525 | 5.000 |
| NaOH | 0.0005 |
| Florex 20/30 RVM Clay | 84.6895 |

EXAMPLE P

2% Slow Release Granule

Four slow release formulations were prepared employing cellulose acetate. The compound of Example 1 was dissolved in acetone and the cellulose acetate was added. The solution was poured over the carrier, mixed well, and air dried. The resulting formulations were as follows.

| Ingredient | Percent by weight |
|---|---|
| Compound of Example 1 | 2.00 |
| Cellulose Acetate | 5.00 |
| Carrier | 93.00 |

The carriers employed in these formulations were the following
Agsorb 30/60 LVM
Attapulgus 30/60 RVM
Florex 30/60 RVM
Oil-Dri Mississippi Grey clay, 30/60 RVM.

EXAMPLE Q

Another 1 lb/gallon (1 gallon = $3.785.10^{-3}$ $m^2$) emulsifiable concentrate was prepared by dissolving the compound of Example 1 in Panasol AN3N and adding other ingredients. The final formulation was as follows:

| Ingredient | Percent by weight |
|---|---|
| Compound of Example 1 | 12.6 |
| Panasol AN3N (a petroleum aromatic solvent supplied by Amoco Chemicals Corp.) | 65.9 |
| Dowanol PM (a glycol mono-ether sold by Dow Chemical Co.) | 16.5 |
| Toximul H | 3.0 |
| Toximul D | 2.0 |
| | 100.00 |

EXAMPLE R

Yet another 20% wettable powder was prepared with the following composition.

| Ingredient | Percent by weight |
|---|---|
| Compound of Example 1, estimated to be of 95% purity | 21.05 |
| Stepanol ME | 5.00 |
| Polyfon O | 5.00 |
| Zeolex 7 | 5.00 |
| Barden's Clay | 63.95 |
| | 100.00 |

The compounds to be employed in the present methods are prepared in conventional procedures from acyl halides and anilines. All of the anilines and the acyl halides wherein m or n = 0 are known. Those wherein m = 1 or n = 1 can also be prepared in known procedures, by electrochemical fluorination of a methyl-substituted cyclopentanoyl or cyclohexanoyl halide, or electrochemical fluorination of a methyl-, methoxy-, trifluoromethyl-, or trifluoromethoxy-substituted benzoyl halide. Electrochemical fluorination of benzoyl halides, whether unsubstituted or substituted, results in some rearrangement to $CF_3$-substituted cyclopentanoyl fluorides, thus providing a synthetic route to those starting materials wherein m = 1 or 2 (note Examples 9 and 13, above). A general reference on electrochemical fluorination is "Chemistry of Organic Fluorine Compounds" by M. Hudlicky (Horwood Ltd., 1976) especially page 73.

## Claims

1. An insecticidal formulation for inhibiting Diabrotica larvae comprising, as active ingredient, from 0.05 to 95.0 percent by weight of a fluorinated cycloalkane carboxanilide of the formula (I)

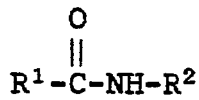

(I)

wherein $R^1$ represents
(1) fluorocyclopentyl of the formula

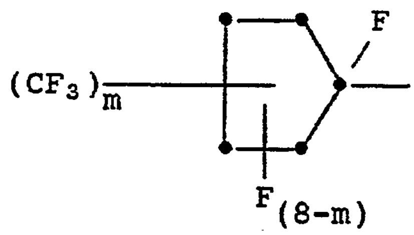

or

or
(2) fluorocyclohexyl of the formula

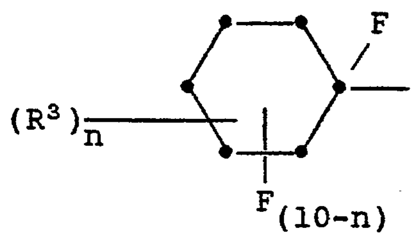

wherein m represents 0, 1, or 2; n represents 0 or 1; $R^3$ represents trifluoromethyl or trifluoromethoxy; and $R^2$ represents
(1) 2-bromo-4-nitrophenyl,
(2) 2-chloro-4-nitrophenyl,
(3) 2-iodo-4-nitrophenyl,
(4) 2-cyano-4-chlorophenyl,
(5) 2,5-dichloro-4-nitrophenyl,
(6) 2-methyl-4-nitro-5-chlorophenyl,
(7) 2,3,4,5-tetrachlorophenyl, or
(8) pentafluorophenyl;
or a sodium, potassium, or ammonium salt, where ammonium refers to the formula

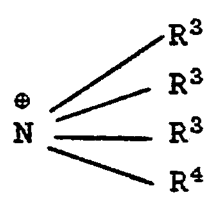

wherein each $R^3$ independently represents alkyl of $C_1$-$C_{20}$, benzyl, 2-hydroxyethyl, 2-hydroxypropyl, or 3-hydroxypropyl, and $R^4$ represents hydrogen or $R^3$, the total number of carbon atoms in all $R^3$ and $R^4$ groups being from 12 to 60, except that when one or more $R^3$ or $R^4$ groups represents 2-hydroxyethyl, 2-hydroxypropyl, or 3-hydroxypropyl, the total number of carbon atoms in all $R^3$ and $R^4$ groups is from 6 to 60, in combination with at least one agriculturally acceptable carrier or diluent.

2. A formulation of claim 1 wherein the active ingredient is a fluorinated cycloalkanecarboxanilide of formula (I) wherein $R^1$ represents

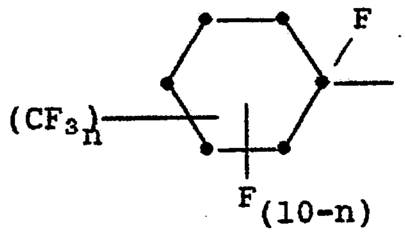

wherein n represents 0 or 1, and
$R^2$ is as defined in Claim 1, provided $R^2$ is not 2-methyl-4-nitro-5-chlorophenyl.

3. The formulation of Claim 2 wherein the active agent is 2'-bromo-4'-nitro-1,2,2,3,3,4,4,5,5,6,6-undecafluorocyclohexanecarboxan lide or a salt thereof as defined.

4. The formulation of Claim 2 wherein the active agent is 2'-bromo-4'-nitro-1,2,2,3,3,4,4,5,5,6,6-undecafluorocyclohexanecarboxan lide, hexadecyltrimethylammonium salt.

5. The formulation of Claim 2 wherein the active agent is 2'-bromo-4'-nitro-1,2,2,3,3,4,4,5,5,6,6-undecafluorocyclohexanecarboxan lide, octadecyltrimethylammonium salt.

6. The formulation of Claim 2 wherein the active agent is 2'-bromo-4'-nitro-1,2,2,3,3,4,4,5,5,6,6-undecafluorocyclohexanecarboxan lide, tributylammonium salt.

7. The formulation of Claim 2 wherein the active agent is 2'-bromo-4'-nitro-1,2,2,3,3,4,4,5,5,6,6-undecafluorocyclohexanecarboxan lide, dimethylbis($C_{10}$-$C_{18}$)-ammonium salt.

8. A method for inhibiting Diabrotica larvae which comprises applying to the locus of the larvae an effective amount of an active agent which is a compound of the formula (I)

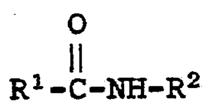

(I)

wherein $R^1$ represents
(1) fluorocyclopentyl of the formula

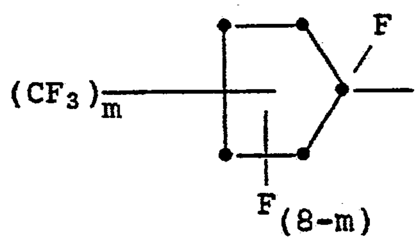

or

or
(2) fluorocyclohexyl of the formula

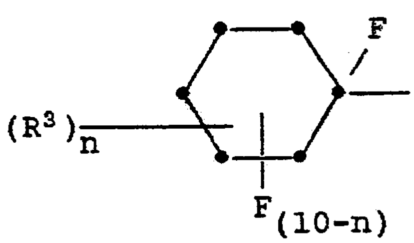

wherein m represents 0, 1, or 2; n represents 0 or 1; $R^3$ represents trifluoromethyl or trifluoromethoxy; and $R^2$ represents
(1) 2-bromo-4-nitrophenyl,
(2) 2-chloro-4-nitrophenyl,

(3) 2-iodo-4-nitrophenyl,
(4) 2-cyano-4-chlorophenyl,
(5) 2,5-dichloro-4-nitrophenyl,
(6) 2-methyl-4-nitro-5-chlorophenyl,
(7) 2,3,4,5-tetrachlorophenyl, or
(8) pentafluorophenyl;
or a sodium, potassium, or ammonium salt, where ammonium refers to the formula

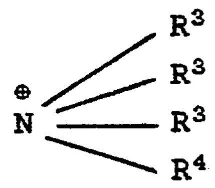

wherein each $R^3$ independently represents alkyl of $C_1$-$C_{20}$, benzyl, 2-hydroxyethyl, 2-hydroxypropyl, or 3-hydroxypropyl, and $R^4$ represents hydrogen or $R^3$, the total number of carbon atoms in all $R^3$ and $R^4$ groups being from 12 to 60, except that when one or more $R^3$ or $R^4$ groups represents 2-hydroxyethyl, 2-hydroxypropyl, or 3-hydroxypropyl, the total number of carbon atoms in all $R^3$ and $R^4$ groups is from 6 to 60.

9. The method of claim 8 wherein the compound of formula (I) is one wherein $R^1$ is

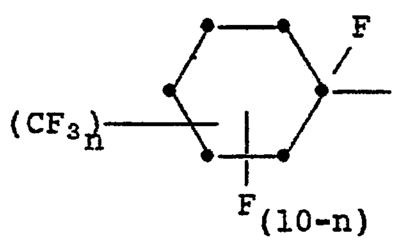

wherein n is 0 or 1, and
$R^2$ is as defined in claim 8, provided $R^2$ is not 2,5-dichloro-4-nitrophenyl.

10. The method of Claim 9 wherein the active agent is 2'-bromo-4'-nitro-1,2,2,3,3,4,4,5,5,6,6-undecafluorocyclohexanecarboxan lide or a salt thereof as defined.

## Patentansprüche

1. Insektizide Zubereitung zur Hemmung von Diabrotica-Larven, enthaltend als Wirkstoff 0,05 bis 95 Gew.-% eines fluorierten Cycloalkancarboxanilids der Formel (I)

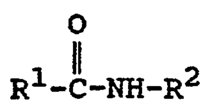 (I)

worin $R^1$
(1) Fluorcyclopentyl der Formel

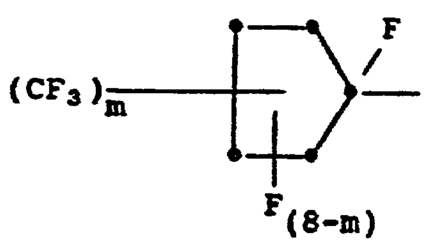

oder

(2) Fluorcyclohexyl der Formel

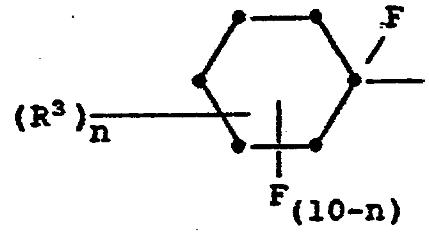

bedeutet, worin m den Wert 0, 1 oder 2 hat; n den Wert 0 oder 1 hat; $R^3$ Trifluormethyl oder Trifluormethoxy bedeutet; und $R^2$

(1) 2-Brom-4-nitrophenyl,
(2) 2-Chlor-4-nitrophenyl,
(3) 2-Jod-4-nitrophenyl,
(4) 2-Cyano-4-chlorphenyl,
(5) 2,5-Dichlor-4-nitrophenyl,
(6) 2-Methyl-4-nitro-5-chlorphenyl,
(7) 2,3,4,5-Tetrachlorphenyl oder
(8) Pentafluorphenyl

bedeutet;
oder ein Natrium-, Kalium- oder Ammoniumsalz von einer der vorstehenden Verbindungen, wobei Ammonium einen Rest der folgenden Formel bedeutet

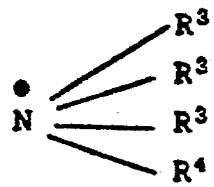

in der die einzelnen Reste $R^3$ jeweils unabhängig voneinander $C_1$–$C_{20}$-Alkyl, Benzyl, 2-Hydroxyethyl, 2-Hydroxypropyl oder 3-Hydroxypropyl bedeuten und $R^4$ Wasserstoff oder $R^3$ bedeutet, wobei die Gesamtzahl der Kohlenstoffatome in sämtlichen Resten $R^3$ und $R^4$ 12 bis 60 beträgt, mit der Ausnahme, daß, wenn einer oder mehrere der Reste $R^3$ oder $R^4$ 2-Hydroxyethyl, 2-Hydroxypropyl oder 3-Hydroxypropyl bedeuten, die Gesamtzahl der Kohlenstoffatome in sämtlichen Resten $R^3$ und $R^4$ 6 bis 60 beträgt, in Kombination mit mindestens einem landwirtschaftlich verträglichen Trägerstoff oder Verdünnungsmittel.

2. Zubereitung nach Anspruch 1, wobei es sich beim Wirkstoff um ein fluoriertes Cycloalkancarboxanilid der Formel (I) handelt, in der $R^1$ einen Rest der folgenden Formel bedeutet

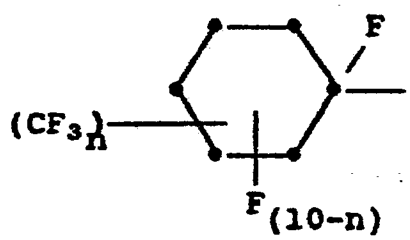

worin n den Wert 0 oder 1 hat und
$R^2$ die in Anspruch 1 definierte Bedeutung hat, mit der Maßgabe, daß $R^2$ nicht 2-Methyl-4-nitro-5-chlorphenyl bedeutet.

3. Zubereitung nach Anspruch 2, wobei es sich beim Wirkstoff um 2′-Brom-4′-nitro-1,2,2,3,3,4,4,5,5,6,6-undecafluorcyclohexancarboxanilid oder einem Salz davon gemäß der gegebenen Definition handelt.

4. Zubereitung nach Anspruch 2, wobei es sich beim Wirkstoff um 2′-Brom-4′-nitro-1,2,2,3,3,4,4,5,5,6,6-undecafluorcyclohexancarboxanilid-hexadecyltrimethylammoniumsalz handelt.

5. Zubereitung nach Anspruch 2, wobei es sich beim Wirkstoff um 2′-Brom-4′-nitro-1,2,2,3,3,4,4,5,5,6,6-undecafluorcyclohexancarboxanilid-octadecyltrimethylammoniumsalz handelt.

6. Zubereitung nach Anspruch 2, wobei es sich beim Wirkstoff um 2'-Brom-4'-nitro-1,2,2,3,3,4,4,5,5,6,6-undecafluorcyclohexancarboxanilid-tributylammoniumsalz handelt.

7. Zubereitung nach Anspruch 2, wobei es sich beim Wirkstoff um 2'-Brom-4'-nitro-1,2,2,3,3,4,4,5,5,6,6-undecafluorcyclohexancarboxanilid-dimethylbis-($C_{10}$–$C_{18}$)-ammoniumsalz handelt.

8. Verfahren zur Hemmung von Diabrotica-Larven, das die Aufbringung einer wirksamen Menge eines Wirkstoffs auf die Stelle der Larven umfaßt, wobei es sich beim Wirkstoff um eine Verbindung der Formel (I) handelt

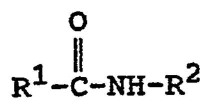 (I)

worin $R^1$

(1) Fluorcyclopentyl der Formel

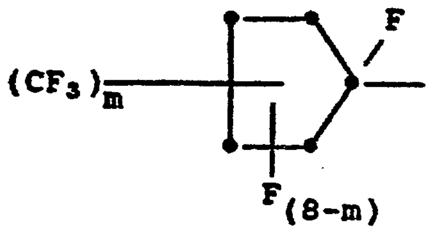

oder

(2) Fluorcyclohexyl der Formel

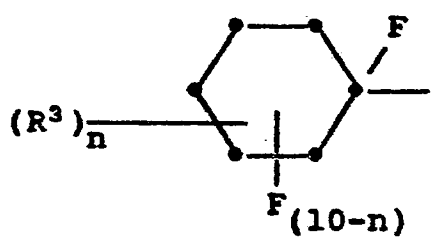

bedeutet, worin m den Wert 0, 1 oder 2 hat; n den Wert 0 oder 1 hat; $R^3$ Trifluormethyl oder Trifluormethoxy bedeutet; und $R^2$

(1) 2-Brom-4-nitrophenyl,
(2) 2-Chlor-4-nitrophenyl,
(3) 2-Jod-4-nitrophenyl,
(4) 2-Cyano-4-chlorphenyl,
(5) 2,5-Dichlor-4-nitrophenyl,
(6) 2-Methyl-4-nitro-5-chlorphenyl,
(7) 2,3,4,5-Tetrachlorphenyl oder
(8) Pentafluorphenyl

bedeutet;

oder ein Natrium-, Kalium- oder Ammoniumsalz von einer der vorstehenden Erfindungen, wobei Ammonium einen Rest der folgenden Formel bedeutet

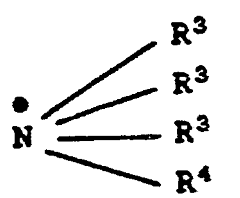

in der die einzelnen Reste $R^3$ jeweils unabhängig voneinander $C_1$–$C_{20}$-Alkyl, Benzyl, 2-Hydroxyethyl, 2-Hydroxypropyl oder 3-Hydroxypropyl bedeuten und $R^4$ Wasserstoff oder $R^3$ bedeutet, wobei die Gesamtzahl der Kohlenstoffatome in sämtlichen Resten $R^3$ und $R^4$ 12 bis 60 beträgt, mit der Ausnahme,

daß, wenn einer oder mehrere der Reste $R^3$ oder $R^4$ 2-Hydroxyethyl, 2-Hydroxypropyl oder 3-Hydroxypropyl bedeuten, die Gesamtzahl der Kohlenstoffatome in sämtlichen Resten $R^3$ und $R^4$ 6 bis 60 beträgt.

9. Verfahren nach Anspruch 8, wobei es sich bei der Verbindung der Formel (I) um eine Verbindung handelt, in der $R^1$ einen Rest der folgenden Formel bedeutet

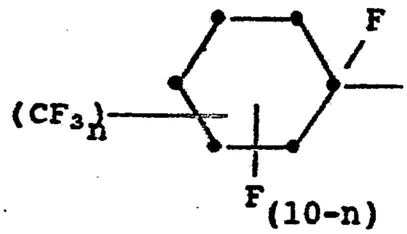

worin n den Wert 0 oder 1 hat und
$R^2$ die in Anspruch 8 definierte Bedeutung hat, mit der Maßgabe, daß $R^2$ nicht 2,5-Dichlor-4-nitrophenyl bedeutet.

10. Verfahren nach Anspruch 9, wobei es sich beim Wirkstoff um 2′-Brom-4′-nitro-1,2,2,3,3,4,4,5,5,6,6-undecafluorcyclohexancarboxanilid oder ein Salz gemäß der gegebenen Definition handelt.

## Revendications

1. Formulation insecticide destinée à inhiber les larves Diabrotica, comprenant, comme ingrédient actif, de 0,05 à 95,0% en poids d'un cycloalcanecarboxanilide fluoré de formule (I)

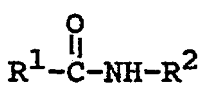

(I)

dans laquelle $R^1$ représente
(1) un groupe fluorocyclopentyle de formule

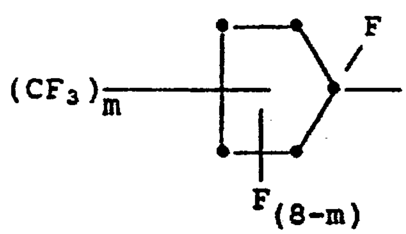

ou

(2) un groupe fluorocyclohexyle de formule

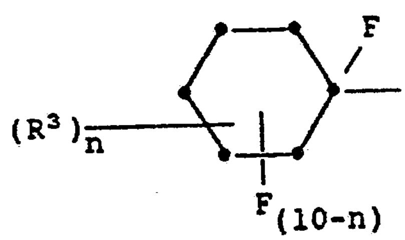

dans laquelle m représente 0, 1 ou 2; n représente 0 ou 1; $R^3$ représente un groupe trifluorométhyle ou un groupe trifluorométhoxy et $R^2$ représente
(1) un groupe 2-bromo-4-nitrophényle,
(2) un groupe 2-chloro-4-nitrophényle,
(3) un groupe 2-iodo-4-nitrophényle,

(4) un groupe 2-cyano-4-chlorophényle,
(5) un groupe 2,5-dichloro-4-nitrophényle,
(6) un groupe 2-méthyl-4-nitro-5-chlorophényle,
(7) un groupe 2,3,4,5-tétrachlorophényle ou
(8) un groupe pentafluorophényle;

ou un sel de sodium, de potassium ou d'ammonium, où le terme "ammonium" représente la formule

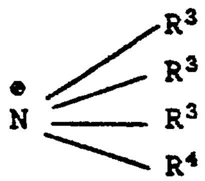

dans laquelle chaque radical $R^3$ représente, indépendamment l'un de l'autre, un groupe alkyle en $C_1$–$C_{20}$, un groupe benzyle, un groupe 2-hydroxyéthyle, un groupe 2-hydroxypropyle ou un groupe 3-hydroxypropyle, et $R^4$ représente un atome d'hydrogène ou $R^3$, le nombre total des atomes de carbone dans tous les groupes $R^3$ et $R^4$ allant de 12 à 60, avec cette exception que, lorsqu'un ou plusieurs groupes $R^3$ ou $R^4$ hydroxypropyle ou un groupe 3-hydroxypropyle, le nombre total des atomes de carbone dans tous les groupes $R^3$ et $R^4$ va de 6 à 60, en combinaison avec au moins un support ou un diluant agriculturellement acceptable.

2. Formulation selon la revendication 1, dans laquelle l'ingrédient actif est un cycloalcanecarboxanilide fluoré de formule (I) dans laquelle

$R^1$ représente

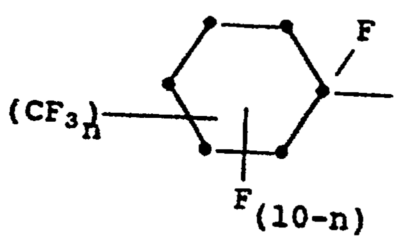

où n représente 0 ou 1, et

$R^2$ est tel que défini dans la revendication 1, avec cette réserve que $R^2$ ne représente pas un groupe 2-méthyl-4-nitro-5-chlorophényle.

3. Formulation selon la revendication 2, dans laquelle l'agent actif est le 2′-bromo-4′-nitro-1,2,2,3,3,4,4,5,5,6,6-undécafluorocyclohexanecarboxanilide ou un de ses sels tels que définis.

4. Formulation selon la revendication 2, dans laquelle l'agent actif est le 2′-bromo-4′-nitro-1,2,2,3,3,4,4,5,5,6,6-undécafluorocyclohexanecarboxanilide, sel d'hexadécyltriméthylammonium.

5. Formulation selon la revendication 2, dans laquelle l'agent actif est le 2′-bromo-4′-nitro-1,2,2,3,3,4,4,5,5,6,6-undécafluorocyclohexanecarboxanilide, sel d'octadécyltriméthylammonium.

6. Formulation selon la revendication 2, dans laquelle l'agent actif est le 2′-bromo-4′-nitro-1,2,2,3,3,4,4,5,5,6,6-undécafluorocyclohexanecarboxanilide, sel de tributylammonium.

7. Formulation selon la revendication 2, dans laquelle l'agent actif est le 2′-bromo-4′-nitro-1,2,2,3,3,4,4,5,5,6,6-undécafluorocyclohexanecarboxanilide, sel de diméthylbis(en $C_{10}$–$C_{18}$)ammonium.

8. Procédé destiné à inhiber les larves Diabrotica, consistant à appliquer, au locus des larves, une quantité efficace d'un agent actif, à savoir un composé de formule (I)

$$R^1-\overset{\overset{O}{\|}}{C}-NH-R^2 \qquad (I)$$

dans laquelle $R^1$ représente

(1) un groupe fluorocyclopentyle de formule

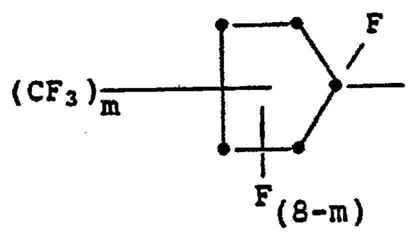

ou

(2) un groupe fluorocyclohexyle de formule

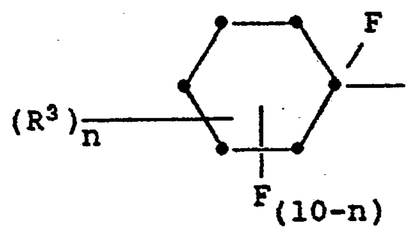

dans laquelle m représente 0, 1 ou 2; n représente 0 ou 1; $R^3$ représente un groupe trifluorométyle ou un groupe trifluorométhoxy et $R^2$ représente

(1) un groupe 2-bromo-4-nitrophényle,
(2) un groupe 2-chloro-4-nitrophényle,
(3) un groupe 2-iodo-4-chlorophényle,
(4) un groupe 2-cyano-4-chlorophényle,
(5) un groupe 2,5-dichloro-4-nitrophényle,
(6) un groupe 2-méthyl-4-nitro-5-chlorophényle,
(7) un groupe 2,3,4,5-tétrachlorophényle ou
(8) un groupe pentafluorophényle;

ou un sel de sodium, de potassium ou d'ammonium, où le terme "ammonium" représente la formule

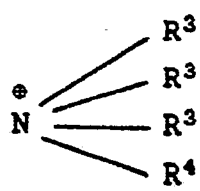

dans laquelle chaque radical $R^3$ représente, indépendamment l'un de l'autre, un groupe alkyle en $C_1$–$C_{20}$, un groupe benzyle, un groupe 2-hydroxyéthyle, un groupe 2-hydroxypropyle ou un groupe 3-hydroxypropyle, et $R^4$ représente un atome d'hydrogène ou $R^3$, le nombre total des atomes de carbone dans tous les groupes $R^3$ et $R^4$ allant de 12 à 60, avec cette exception que, lorsqu'un ou plusieurs groupes $R^3$ ou $R^4$ représentent un groupe 2-hydroxyéthyle, un groupe 2-hydroxypropyle ou un groupe 3-hydroxypropyle, le nombre total des atomes de carbone dans tous les groupes $R^3$ et $R^4$ va de 6 à 60.

9. Procédé selon la revendication 8, dans lequel le composé de formule (I) est un composé où $R^1$ représente

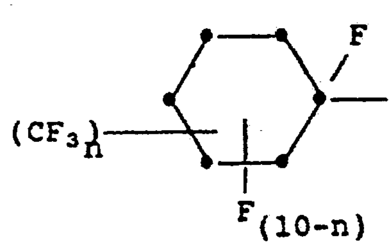

où n représente 0 ou 1, et

$R^2$ est tel que défini dans la revendication 8, avec cette réserve que $R^2$ ne représente pas un groupe 2,5-dichloro-4-nitrophényle.

10. Procédé selon la revendication 9, dans lequel l'agent actif est le 2'-bromo-4'-nitro-1,2,2,3,3,4,4,5,5,6,6-undécafluorocyclohexanecarboxanilide ou un de ses sels tels que définis.